# EUROPEAN PATENT SPECIFICATION

(11) **EP 1 286 924 B1**
(45) Date of publication and mention of the grant of the patent: **12.11.2014**
(21) Application number: 01925738.5
(22) Date of filing: 04.05.2001
(51) Int. Cl.: C02F 11/14, C02F 11/12

(54) **APPARATUS AND METHOD FOR HIGH SPEED DEWATERING OF SLURRIES**
VORRICHTUNG UND VERFAHREN FÜR HOCHGESCHWINDIGKEITENTWÄSSERUNG VON SCHLAMM
APPAREIL ET PROCEDE POUR DESHYDRATER DES BOUES A GRANDE VITESSE

(30) Priority: 05.05.2000 GB 0010986
(43) Date of publication of application: 05.03.2003
(73) Proprietor: Genesis Fluid Solutions LLC, Woodward, OK 73802 (US)
(72) Inventor: HODGES, Michael, Kent, Colorado Springs, CO 80906 (US); CAMPBELL, Larry, D., Harrah, OK 73045 (US)
(74) Representative: Nieuwenhuys, William Francis
(86) International application number: PCT/GB2001/001996
(87) International publication number: WO 2001/085628

(56) References cited:
- DE-A- 4 442 418
- US-A- 4 612 123
- US-A- 5 656 174
- US-A- 5 938 936
- PATENT ABSTRACTS OF JAPAN vol. 018, no. 043 (C-1156), 24 January 1994 (1994-01-24) & JP 05 269309 A (KURITA WATER IND LTD), 19 October 1993 (1993-10-19)

## Description

The present invention relates to improvements in techniques for dewatering of slurries, particularly slurries resulting from "dredge spoils".

Dredge spoil disposal presents a significant problem for dredging contractors. The dredged sludge is suspended in water in the form of a slurry. Such slurries may create serious recovery problems if discharged directly into holding lagoons or settling basins. Accordingly, there is a need to efficiently dewater and reclaim the solid materials from these slurries. This invention provides a quick and efficient means for the separation of water from solids, thereby economically reducing volumes and thereby introducing an attractive option for sediment recovery, re-use, or disposal.

Hydraulic dredges are effective excavation devices for removal of a wide variety of sediments from natural or manmade waterways. The dredges may remove sediments which are classified as contaminated or hazardous sediments as well as non-hazardous sediments. The sediments may comprise debris such as sand, gravel, clays, silts, organic matter, or any combination thereof. Typically, the finest fraction of solids, including clays, silts, and organic matter, contributes the greatest volume and this fraction is also the most difficult to recover. All of the materials excavated from a waterway in the hydraulic dredging process must be removed to a disposal site. Traditionally, these sites include settling basins specifically engineered to accommodate the slow settling characteristics of the finest of the particulate matter. These "sludge lagoons" burden the immediate community in various ways. They occupy significant areas of land and are generally unpleasant neighbors because of the noxious odors emitted during the slow process of drying out the hydrated sediments.

In an attempt to solve the problems associated with such traditional settling basins, dredge slurry dewatering systems were introduced. These dewatering systems are used to separate dredge solids from water so that the solids may be recycled or disposed. The systems typically comprise screening assemblies, hydrocyclones, centrifuges, belt presses and clarifying vessels. Most of these systems operate as "batch treatment" processes, which can accept only defined quantities of dredge spoil at spaced intervals. The dredge spoil is first pumped into a holding vessel, then, while the dredge sits idle, the slurry is slowly pumped and treated by each apparatus in turn, until the holding vessel can be refilled. The processing rates of the individual equipment components of the dewatering system thus limit the throughput rate of the dredging operation. The inefficiencies associated with such batch systems serve to raise the costs of operation.

US Patent No. 5,656,174 describes a dewatering system that is capable of continuous operation. The system employs a series of filtration screens, and optional further separating devices such as hydrocyclones, followed by addition of a flocculating agent to aggregate the fine solids. The flocculated material is then filtered by passage over a tracking screen assembly having two screens supported on an A-shaped frame. Although relatively high system throughputs (e.g. 1200 US gallons per minute [gal/min] [0.073 m³s⁻¹]) can be achieved, the described system has a number of shortcomings. There is no means for adjusting the addition of the flocculating agent in response to variations in either the flow rate or the pulp density of the slurry. Thus, an optimal quantity of flocculating agent might not be consistently added. As the flocculated material is added to the A-shaped tracking screens, local settling of the floccules may occur, creating "mud banks" within the apparatus. Such mud banks result in uneven delivery of material to the screen, with consequent inefficient usage of the full surface area. In extreme cases, clogging may cause the screens to become inoperative.
US5938936 discloses a method for dewatering flocculated materials that uses a diffuser. Reference is also made to US4612123, US4022691 and GB1470681.

The present invention provides a dewatering system that is capable of higher flow rates, is easier to operate, and in which the above mentioned disadvantages are alleviated.
While the method and apparatus of the present invention are particularly adapted for the treatment of the discharge of hydraulic dredges, they can also be used, with modification as necessary, to dewater sludges from a variety of sources.

According to the present invention, there is provided a method of dewatering a stream of slurry, comprising the steps of :
(a) continual or continuous determination of one or more parameters;
(b) addition of a flocculating agent to the stream of slurry in response to the determined parameter or parameters;
(c) mixing the flocculating agent with the slurry, to afford a stream of flocculated slurry;
(d) delivering the flocculated slurry through a diffuser onto a tracking screen; and
(e) filtering the flocculated slurry through the tracking screen to afford solids and a filtrate ; wherein the parameters are: the flow rate of the slurry; the pulp density of the slurry; and the pulp density of the filtrate, and wherein the diffuser comprises a vertically disposed conduit rising from a base having the inlet for the stream of flocculated slurry to an upper portion where the stream of flocculated slurry is delivered to the tracking screen, said conduit having a horizontal sectional area that remains constant or increases from said base to said upper portion, and an aspect ratio in a horizontal section that increases from said base to said upper portion, wherein said base of said diffuser has a horizontal section of aspect ratio of from 1: 1 to 4: 1, and said upper portion of said diffuser has a horizontal section of aspect ratio of from 40:1 to 100:1, the ratio of the horizontal sectional areas at the upper portion and the base being from 1:1 to 3:1.

In another aspect of the present invention, there is provided a diffuser for delivery of a stream of flocculated slurry to a tracking screen, comprising a vertically disposed conduit rising from a base having an inlet for the stream of flocculated slurry to an upper portion where the stream of flocculated slurry is delivered to the tracking screen, said conduit having a horizontal sectional area that remains constant or increases from said base to said upper portion, and an aspect ratio in a horizontal section that increases from said base to said upper portion, wherein said base has a horizontal section of aspect ratio of from 1: 1 to 4: 1, and said upper portion has a horizontal section of aspect ratio of from 40: 1 to 100: 1, the ratio of the horizontal sectional areas at the upper portion and the base being from 1:1 to 3: 1.

In another aspect of the present invention, there is provided apparatus for dewatering a stream of slurry, comprising:
(i) means to continually or continuously determine one more parameters;
(ii) means for adding the flocculating agent to the slurry;
(iii) means responsive to the determined parameter or parameters to control the rate of addition of the flocculating agent by the means for adding;
(iv) a mixer to mix the flocculating agent with the slurry to generate a stream of flocculated slurry;
(v) a tracking screen to filter the flocculated slurry to afford solids and a filtrate ; and
(vi) a diffuser to deliver the flocculated slurry onto the tracking screen; wherein the parameters are: the flow rate of the slurry; the pulp density of the slurry; and the pulp density of the filtrate, and wherein the diffuser is according to the invention.

An assembly may be provided comprising a tracking screen and such a diffuser. The assembly comprising the diffuser and the tracking screen may be mounted on a support, the support being adjustably mounted on a transportation means, so that the assembly can be moved relative to the transportation means so as to allow solids to be removed from the tracking screen by means of gravity. The means for movement of the assembly may comprise one or more electromechanical actuators or jacks. Further, the transportation means may be a barge or a trailer.

The diffuser according to the invention and the assembly may be used in the dewatering method and apparatus according to the invention.

Preferably, the apparatus comprises apparatus for collecting filter cake from the filter screen, comprising:
a pair of elongate spaced sidewalls having opposite ends and a bottom wall extending therebetween; a plurality of plates extending inwardly from at least one of said sidewalls;
said plates establishing a plurality of heights forming a ladder for breaking a fall of said filter cake from said screen to said bottom wall.

Typically, the means to detect the flow rate of the slurry is a Doppler flow meter. A suitable device is the Greyline PDFM-IV, available from Greyline Instruments, Inc. Another suitable device is the C5 model ultrasonic Doppler flow meter from Compu-Flow.

Typically, the means to detect the pulp density of the slurry is a Coriolis tube. This uses the Coriolis effect to measure the density, and hence the pulp density, of the slurry. Alternatively, a nuclear density meter may be used. It is preferred to measure the pulp density of the slurry, but it is also possible to measure the pulp density of the filtrate, (either instead of or in addition to that of the slurry) and use this information to calculate the amount of flocculating agent needed.

The readings from the determination of the flow rate and/or the pulp density are communicated to the means to control the rate of addition of the flocculating agent, which means is preferably a programmable logic control device (PLC). The communication is preferably electronic. A suitable PLC is the T1 model from Toshiba. Using an algorithm that is pre-set and determined for the particular characteristics of the slurry being processed, the PLC calculates the requisite amount of flocculating agent to be added, in response to the measured flow rate and/or pulp density (and preferably both). Thus the rate of addition of the flocculating agent added will be automatically adjusted if the flow rate and/or pulp density varies.

The flocculating agent is preferably added under control of the PLC. Preferably, the addition of the flocculating agent is achieved by means of a positive displacement pump in electronic communication with the PLC. The positive displacement pump is preferably of the metering pump variety. Suitable pumps are the Moyno (RTM) Metering Pumps. The PLC regulates the revolutions per minute (RPM) of the metering pump, and hence the rate of addition of the flocculating agent.

Preferably, the addition of the flocculating agent to the stream of slurry occurs *via* a circular "halo" multiple-port injection stage. This results in more even addition of the flocculating agent, and hence more effective initial contact between polymer and solids, resulting in improved flocculation.

After the addition of the flocculating agent, the flocculating agent and slurry are mixed. The mixing is preferably achieved by means of a dynamic mixer, that is, a simple mixer, preferably with a three-bladed paddle, having adjustable mixing speed, for example by means of a rheostat. This allows adjustment of the mixing speed in response to the particular slurry being processed. Generally, however, it will be sufficient to set a speed for a particular operation, and it will not be necessary to continuously adjust the mixing speed as the operation progresses. It will be clear to those skilled in the art that the mixing speed is important, because too slow a speed will limit the dispersion of the flocculating agent, and efficient flocculation will not be achieved, while too high a speed will shear the forming floccules. However, it is desirable for the dynamic mixer to communicate with the PLC so as to be automatically activated whenever the positive displacement pumps are engaged.

The flocculating agent preferably comprises an anionic, cationic, or non-ionic polymer. However, cationic polymers are not preferred, as they can be poisonous to fish, and therefore are not suitable for use when the recovered water is to be returned to the environment (as will usually be the case).

Flocculating agents comprising a polyacrylamide or a mixture of polyacrylamides are particularly preferred.

Traditionally, emulsion polymers have been used as flocculating agents, but these have the disadvantage of including organic solvents, which it is undesirable to use when the recovered water is to be returned to the environment. In the present invention, it is particularly preferred to use dry polymers with rapid hydration time, which are pre-hydrated before being added to the slurry stream by means of the positive displacement pump. These allow the convenience of handling of dry materials, and offer a wider range of available polymers, but give hydration times sufficiently low to be pre-hydrated before the step of polymer addition in an acceptable time. It is particularly convenient and advantageous to use recovered water from the dewatering process for the pre-hydration of the polymer.

Further time for the floccule formation is available as the stream of slurry moves from the mixer to the diffuser for the dewatering step.

The diffuser as defined above (sometimes referred to herein as a riser) is an important aspect of the method of the present invention, because it allows the delivery of an evenly distributed stream of flocculated slurry to the tracking screen. Prior art systems lacking such a diffuser are prone to clogging of the stream of flocculated slurry before delivery to the tracking screen, and to uneven delivery of the flocculated slurry to the tracking screen. The diffuser according to the present invention delivers the stream of flocculated slurry evenly to the tracking screen, resulting in efficient use of the whole of the surface of the tracking screen, and hence improved throughputs.

According to a preferred embodiment of the invention, the diffuser is generally fan-shaped, and, in a front elevation, rises from a relatively narrow base, *via* a substantially triangular middle portion, to a relatively wide upper portion, and, in a side elevation, tapers from a base to a narrower upper portion. Preferably, the base and the upper portion, in both front elevation and in side elevation, are substantially rectangular.

In a preferred embodiment, the inlet for the stream of flocculated slurry is transverse to the conduit. This imparts increased shear to the flocculated slurry, thereby keeping the floccules evenly suspended, and preventing local sedimentation.

The diffuser preferably further comprises flanges disposed parallel to and slightly below the rim of the front and back of the upper portion of the diffuser, extending downwardly at an angle of from 30 to 60° from the horizontal. It is preferred that this angle match that of the A-frame tracking screen. In most cases, an angle of 40-55°, preferably 45-50°, will be appropriate. These flanges are sometimes referred to herein as weir plates.

The tracking screen, sometimes herein referred to as a separation screen, preferably comprises two screens mounted on an A-frame. Such tracking screens are described in detail in US 5,656,174. The angle at which each screen is set preferably matches that of the flanges of the diffuser, namely from 30 to 60°, preferably from 40 to 55°, more preferably 45 to 50° from the horizontal. However, whereas in US 5,656,174 it is preferred to use a system whereby the screen on each side of the A-frame consists of two screen sections, preferably set at two different angles, it has been found that, when used with the diffuser of the present invention, this is not necessary. Therefore, although different angles can be used, in the present invention it is preferred to use a tracking screen set at a single angle along the whole length of each side of the A-frame, and it is also preferred to use a single screen section along each side of the A-frame.

The tracking screen preferably has openings of from 0.3 to 1.5 mm, more preferably 0.4 to 1.0mm, and most preferably 0.5 to 0.9mm. The screen preferably has wedge wires, with wedge wire angles set at from 5 to 10°. The wedge wire angle is the angle at which the wedge (triangular cross-sectioned) wires are set against the flow of the slurry down the screen, in order to assist the arrest of the floccules on the screen surface.

The screens on each side of the A-frame are preferably hingedly mounted at the apex of the A frame, and are preferably provided with electromechanical actuators to adjust the screen angle. The screen angle can then be adjusted even when the assembly comprising the tracking screen and the diffuser is in use.

The tracking screen is also preferably provided with a vibrator to enhance the efficiency of the filtration. Preferably, the vibrator provides parabolic vibration of the screen, and the vibration rate is preferably from 1000 to 3500 revolutions per minute (RPM), more preferably from 1300 to 2600 RPM.

The apparatus for use with the dewatering method of this invention will usually be carried on a transportation means, such as a trailer or a barge. In this case, the assembly comprising the tracking screen and the diffuser is preferably mounted on a support. This support is in turn preferably adjustably mounted on the transportation means. This can be achieved by means of electromechanical actuators or jacks. This allows the whole assembly to be moved relative to the transportation means, allowing the solids to be removed from the tracking screens by means of gravity (see below).

The apparatus for collecting filter cake from a separation screen is preferably pivotally coupled with said separation screen for permitting adjustment of an angle of repose of said filter cake within said apparatus. The said bottom wall preferably inclines downwardly to an aperture for enabling said filtercake to flow out of said apparatus; the said sidewalls preferably extend downwardly toward said aperture; such that downward inclination of said bottom wall in cooperation with said sidewalls causes said apparatus to have greater depth adjacent said aperture than at an opposite end from said aperture. The said plates are preferably evenly distributed along at least one sidewall and vertically according to said depth. The said plates preferably extend between said sidewalls, and are preferably curvate. One of said sidewalls preferably includes a splash guard.

The slurry dewatering method of the present invention preferably further comprises the step of:
(f) further clarification of the filtrate.
This can be achieved by any one of a number of means that are themselves known in the art, for example by settling or filtration. Settling can be achieved by means of a chevron or slant rib clarifier, or alternatively by use of a frac tank. Filtration can be achieved by means of a sand filter or a carbon filter.

The clarified water can be returned to the environment, for example a waterway being dredged. Also, the filtrate can be used for the pre-hydration of dry polymer to be used as the flocculating agent (see above).

The slurry dewatering method of the present invention preferably also further comprises the step of:
(g) further dewatering of the solids.
The further dewatering is preferably achieved by means of a belt press. This affords a product that is dry enough to be easily disposed of, or even sold as soil, offering clear commercial advantages.

The filtered floccules accumulate on the surface of the tracking screen, and then roll down the surface of the screen, in a snowball-type effect. The filtered floccules leave the screen with a consistency resembling cottage cheese. These solids can be removed for the step of further dewatering by means of a conveyor belt. However, if the assembly comprising the tracking screen and the diffuser is mounted on a support which is adjustably mounted on the transportation means (see above), then it is possible to raise the assembly so that the removal of the solids can be achieved by gravitational means, such as a trough. The solids are sometimes referred to herein as filter cake.

In a particularly preferred way of operating the dewatering method of the present invention, the stream of slurry is divided after the addition of the flocculating agent, into a plurality of parallel processed streams each provided with a diffuser and a tracking screen. The number of parallel streams will depend on the throughput that it is desired to achieve. With four streams, throughputs of up to 5000 US gal/min (0.30 m³s⁻¹) can be attained.

Slurry to be dewatered according to the method of the present invention can obtained from dredging processes by techniques which are known in the art, such as those described in US 5,656,174. Typically, the initial dredging process will comprise the dredging and slurrying of sediments from the bottom of waterways by means of an augur or cutterhead hydraulic dredge. The dredge is then diluted with water from the waterway in order to allow it to be pumped to the treatment site.

This flow is then typically discharged onto a self-cleaning coarse screen (typically 10-30 mesh [US] [sieve opening 0.59-2.0 mm]) for the removal of large debris. The underflow slurry from the coarse screen is then pumped or gravity fed over a medium (typically 20-100 mesh [US] [sieve opening 0.149-0.84 mm], preferably 30-80 mesh [US] [sieve opening 0.177-0.59 mm]) vibratory screen for the removal of mid-sized material, such as fine gravel, shale, and coarse sand. Suitable screens can be obtained from Derrick Equipment Co. or Linatex Equipment Corporation.

If the slurry contains fine but high specific gravity material that will not bind to a flocculant, such as fine sands, then it is advantageous to also treat the slurry using a hydrocyclone bank to remove this material. The high specific gravity material is spun to the side of the hydrocyclone bowl, and then discharged through the bottom of the cone. The slurry may also be pumped directly to a hydrocyclone, without prior screening.

The residual slurry is then suitable for dewatering according to the method of the present invention, as it should then comprise essentially only fine and ultra fine material, such as clays, silts, and organics. For successful flocculation, pulp densities should be in the range of from 2-20% (weight of solids to volume ratio), preferably 5-10%.

### Brief Description of the Drawings

Figure 1 is a perspective view of dewatering units in accordance with the present invention, shown mounted on a trailer.
Figure 2 is an enlarged sectional view of the gutter shown in Figure 1 showing solids ladders in accordance with the invention.
Figure 3 is an enlarged top plan view of the gutter shown in Figure 1.
Figure 4 is an enlarged side elevational view of a diffuser unit.
Figure 5 is an enlargement of the detail shown in Figure 4, showing the weir plate assembly.
Figure 6 is an enlarged front elevational view of a rapid dewatering unit with parts broken away to show the tracking screen and diffuser assembly.
Figure 7 is an enlarged side elevational view of a dewatering unit showing the tracking screen assemblies in a use position, with alternate use and transport positions shown in phantom.
Figure 8 is a diagrammatic representation showing steps of a method of dewatering a sludge slurry in accordance with the invention.
Figure 9 is an enlarged diagrammatic top plan view of a first alternate embodiment of a gutter.
Figure 10 is a perspective sectional view of the gutter shown in Figure 9.
Figure 11 is an enlarged diagrammatic side view of a second alternate embodiment of a gutter, with one wall removed to show curved plates with accumulated floccules.
Figure 12 is a perspective sectional view of the gutter shown in Figure 11.

The dewatering method and apparatus, the diffuser, and the apparatus for collecting filter cake from a separation screen according to the present invention will now be further described with reference to specific embodiments and to the drawings, it being understood that this is by way of example only, and is not intended to limit the scope of the invention in any way.

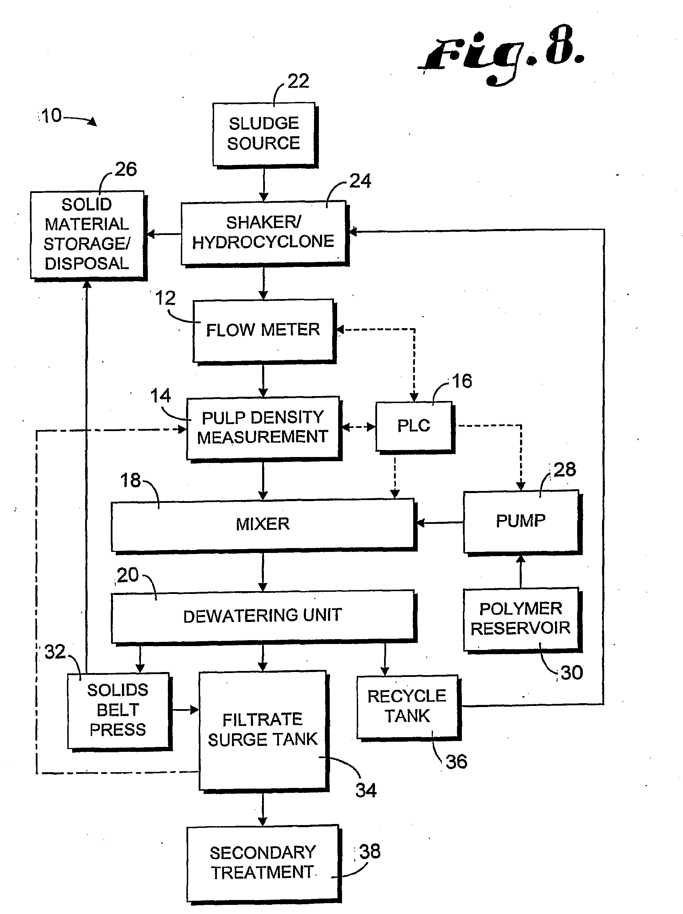

As best shown in the diagrammatic representation of Figure 8, a high speed dewatering system and method 10 in accordance with the invention includes a flow meter 12, a pulp density measurement device 14, programmable logic controller 16, a mixer 18 and a rapid dewatering unit 20.

In more detail, the system 10 of the invention is shown in communication with a source of sludge 22 to be dewatered. The system 10 is depicted to include a shaker and/or hydrocyclone device 24 for removal of coarse and/or high density debris, and a solid material storage or disposal unit 26. A programmable logic controller 16 is operably coupled with a pump 28 which communicates with a polymer reservoir 30 for delivery of a polymer flocculant from the reservoir 30 to the slurry stream, either in line prior to, or following entry of the stream into a mixer 18. The mixer 18 discharges the flocculated slurry into the dewatering unit 20. The dewatering unit 20 discharges filter cake floccules to a solids belt press 32, filtrate to a surge tank 34 and improperly flocculated material to a recycle tank 36. Such material may be delivered from the recycle tank 36 to the shaker/hydrocyclone 24 and then through the entire system 10 again. The output of the filtrate surge tank 34 may be recycled to the shaker/hydrocyclone 24, or to a secondary treatment unit 38.

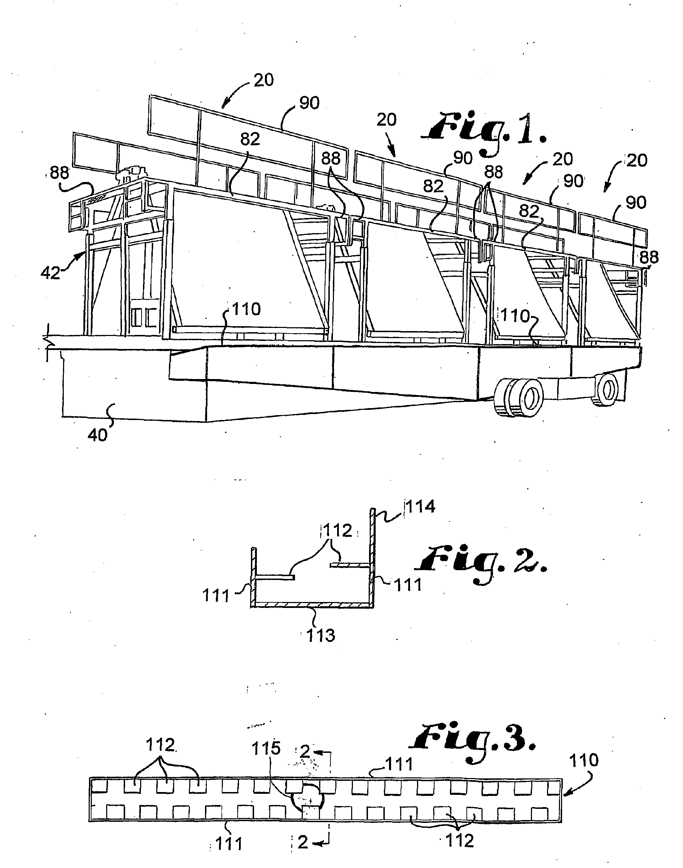

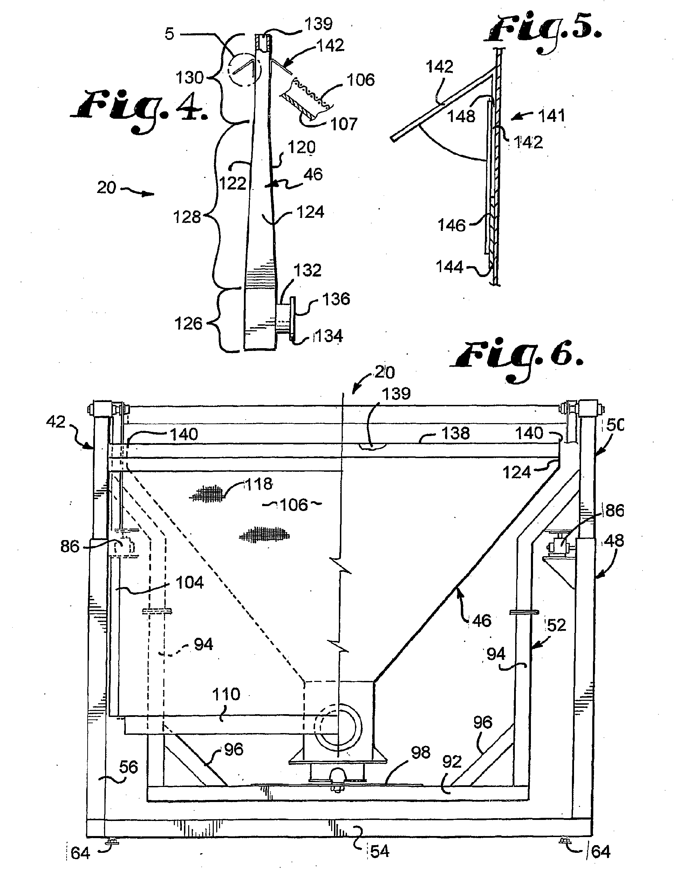

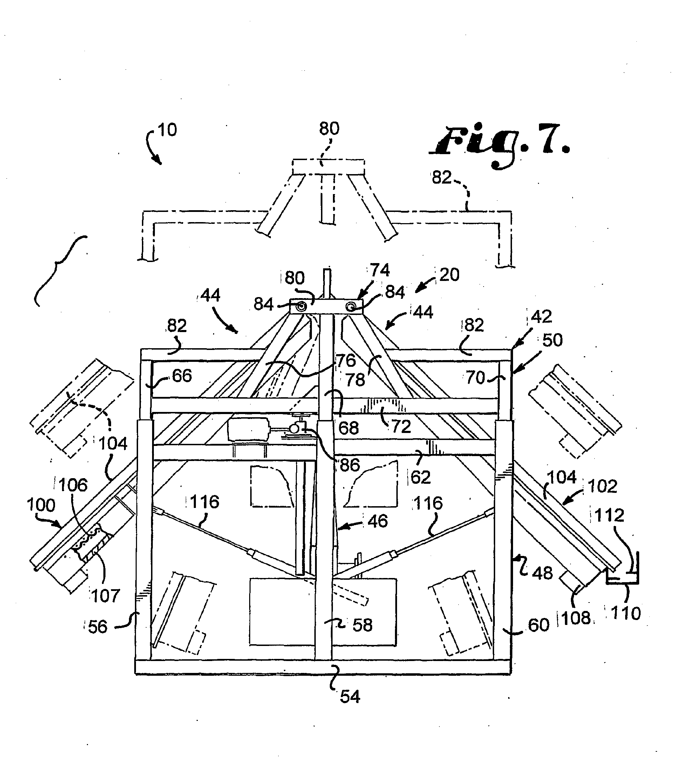

The rapid dewatering unit 20 is shown in Figure 1 mounted on a flatbed trailer 40 for transport by road. The invention may also be embodied in connection with any other suitable means of transport, such as a barge or railroad car, or it may be embodied in a permanent installation. The dewatering unit 20 broadly includes a support structure or framework 42, supporting a tracking screen assembly 44 (Figure 7) and diffuser assembly or riser 46 (Figures 4 and 6).

The framework 42 is best shown in Figures 1, 6 and 7 to include a lower frame 48 in telescoping registry with an upper frame 50, and a diffuser frame 52. The lower frame 48 is constructed in two mirror image halves, each including an elongated horizontal base member 54, transversely coupled with a set of spaced back, center and front vertical upright support members, 56, 58 and 60 (Figure 7). The uprights 56, 58 and 60 are constructed of equal lengths of a suitable material such as square tubular steel. A cross brace 62 transversely intercouples each set of upright support members 56, 58, and 60 in spaced relation to their uppermost ends. Fasteners 64 are provided for coupling the base members 54 to a horizontal support surface such as the bed of a trailer 40.

The upper frame 50 includes matching opposed sets of back, center and front vertical support members 66, 68 and 70, transversely coupled with a cross brace 72. The support members 66, 68 and 70 are also of square tubular construction and are sized to be received within the corresponding tubular upright supports 56, 58 and 60 of the lower frame 48. An upstanding A-frame 74 is centered on the cross brace 72 of each upper frame 50, and includes a pair of legs 76 and 78 surmounted by a header 80. The center support member 68 is elongated for coupling with the A-frame header 80. A header 82 surmounts the back and front uprights 66 and 70 of the upper frame 50 and is angularly coupled with the sides of the A-frame legs 76 and 78, to form a square-shaped top plan view.

The A-frame header 80 includes a pair of spaced hinges 84 for mounting a pair of tracking screen assemblies 44. As best shown in Figure 6, the lower frame 48 includes a pair of opposed screw-type jacks 86 for urging the upper frame 50 from a lowered transport/storage position to an elevated operating position shown in Figure 7, a vertical travel distance of about 0,91 m (3 feet).

As shown in Figure 1, multiple dewatering units 20 may be employed in a dewatering system 10, each having a support structure 42 supporting a tracking screen assembly 44 and diffuser 46. In such systems 10, the headers 82 of the support structure 42 may be extended and appropriately braced to form a walkway 88 at opposed ends of each system unit 20. Companion guard rails 90 maybe mounted along opposed sides of the headers 82.

As shown in Figure 6, the diffuser support frame 52 includes a lower base member 92 transversely intercoupling a pair of vertical support members 94. The upper portions of the vertical supports 94 are angled outwardly in mirror images for coupling with the upper support structure frame 50 to impart an overall dog-leg configuration. A pair of angle braces 96 intercouple the lower portions of the vertical support members 94 with the diffuser frame base 92. A generally planar base plate 98 is centered on the base 92. The base plate is preferably constructed of ½" steel (12mm).

The tracking screen assembly 44 preferably comprises back and front screen assemblies 100 and 102 coupled in supporting relationship with the A-frame hinges 84. Such tracking screens are described in detail in U.S. Patent No. 5,656,174. Each tracking screen assembly 44 includes an open square frame 104 supporting a generally planar screen 106 over a rear drip pan 107. A drain 108 is coupled with each lower corner of the drip pan 107 (one is shown in Figure 7) to receive a chute (not shown) for carrying the filtrate to the surge tank 34 (Figure 8).

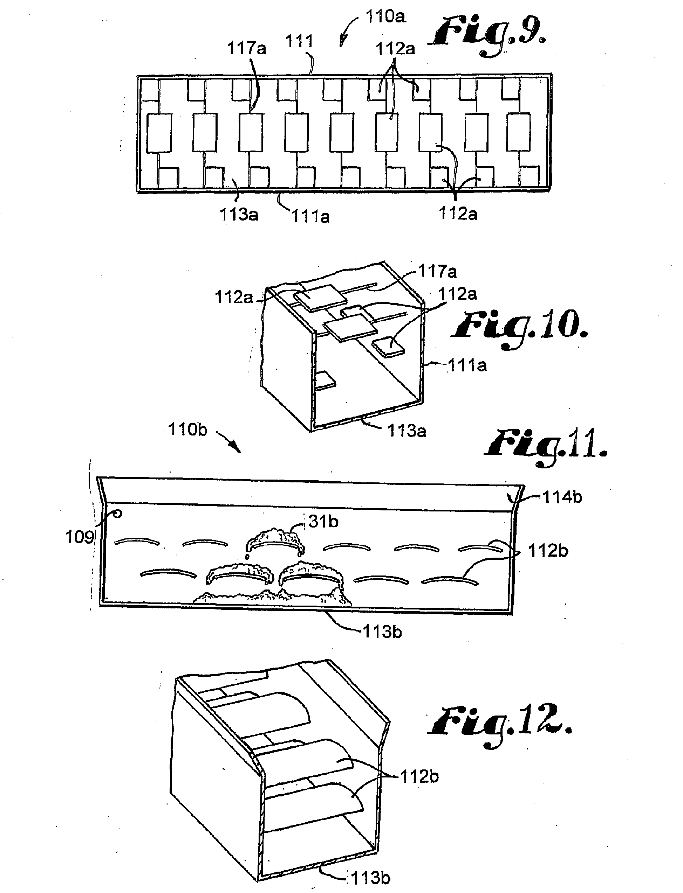

A gutter 110, best shown in Figures 2 and 3 is mounted on pivots 109 below the outward-facing lower margin of each frame 104 for receiving the filter cake. Each gutter 110 includes a pair of sidewalls 111, a series of staggered plates or ladders 112 which extend inwardly from the sidewalls, and a bottom wall 113. One set of plates 112 may extend inwardly from each of the sidewalls 111 as depicted in Figures 2 and 3, or there may be multiple rows of plates 112, as depicted in Figure 9. The plates 112 are generally flat and quadrilateral in configuration.

A first alternate embodiment of the gutter 110a depicted in Figures 9 and 10 includes sidewalls 111a, and a bottom wall 113a, and a series of staggered plates or ladders 112a, the centermost ladder 112a being supported from the sidewalls 111 a by tubular wires 117a. A second alternate embodiment of the gutter 110b includes curved plates 112b, which extend between the sidewalls. The gutters 110, 110a and 110b are constructed so that the forward sidewall 111, 111a extends upwardly to form a splash guard 114, or 114b. The gutter 110, or 110b may be constructed to incline toward one side of a dewatering unit 20, or it may converge toward a central aperture 115. The plates 112, 112a or 112b are evenly distributed along the sidewalls 111, across the center of the gutter 110a and vertically according to the depth of the gutter 110, 110a or 110b, so that the vertical distances between the plates 112, 112a or 112b do not exceed about 4 inches (100mm).

The filter cake falls from the screen 106 onto the plates 112, 112a or 112b. Floccules 31b collect on a plate 112, 112a or 112b and act as a buffer for the fall of additional floccules. Once a predetermined load is reached, the accumulated cake slides off the plate 112, 112a or 112b and tumbles to the next lower plate 112, 112a or 112b. In this manner, the plates 112, 112a and 112b break the fall of the filter cake from the screen 106 to the bottom wall 113, 113a, or 113b so that floccule shear is minimized. Once the cake reaches the bottom wall 113, 113a, or 113b, the angle of incline conveys them to the aperture 115. Either alternatively or in addition to the gutter 110, 110a or 110b, a conveyor (not shown) may be supported on the trailer 40 for carrying away the filter cake after it slides off the screens 106.

The tracking screen assemblies 44 are equipped with pairs of electromechanical actuators or jackscrews 116, shown in Figure 7 to permit adjustment of the angle of the screen assemblies 100 and 102 in accordance with the characteristics of the slurry to be dewatered. Suitable electromechanical actuators are manufactured by and may be obtained from the Duff-Norton Company. An actuator 116 is coupled with each of the inward-facing side margins of each frame 104. In this manner, the angle of the screen assemblies 100 and 102 maybe adjusted even during operation of the dewatering unit 20. A vibrator (not shown) may also be coupled with the tracking screen frames 104 to enhance filtration efficiency. A preferred vibrator provides parabolic vibration of the screens 106 at a rate of from about 1300 to about 2600 revolutions per minute (rpm).

The tracking screens 106 are of wedge-wire construction, each wire having a triangular cross section with openings between the wires of from about 0.5mm to about 0.9 mm. The wedge wires are set to subtend a preselected angle against the flow of the slurry down each screen 106 in order to assist the arrest of floccules on the surface of the screen 106, with preferred angles of from about 5° to about 10°.

The dewatering unit 20, depicted in Figures 4, 6 and 7, presents a generally fan-shaped overall configuration including a generally vertically disposed riser 46 having a front wall 120, a back wall 122 and a pair of identical sidewalls 124. The riser 46 includes a generally rectangular, base 126, generally triangular middle portion 128, and a generally rectangular an upper portion 130. When viewed in front elevation, the base 126 is relatively narrow and the upper portion 130 is substantially wider. The base 126 has a horizontal section of relatively low aspect ratio of from about 1:1 to about 4:1, and the upper portion 130 has a horizontal section of relatively high aspect ratio of from about 40:1 to about 100:1. The ratio of the horizontal cross sectional areas of the upper portion 130 to the base 126 is from about 1:1 to about 3:1. The middle portion 128 has a generally triangular or trapezoidal front elevation, and upwardly tapering side elevation.

When viewed in front elevation, the base 126 has a relatively narrow width of about 1' 2.75" (37.5cm), and the upper portion 130 has a relatively broad width of about 8'0" (2.44m). When viewed in side elevation, the diffuser 46 tapers from a base 126 having a depth of about 6.5" (16.5cm) to a narrower upper portion 130 having a depth of about 1.625" (4.1 cm). The relative dimensions of components of the diffuser 46 illustrated in Figures 4 and 6 are not strictly proportional to the actual dimensions.

The front wall 120 of the diffuser base 126 is centrally apertured for coupling with a stub pipe 132 equipped with a radially expanded flange 134, which structure collectively defines an inlet 136 for receiving a stream of flocculated slurry. In the preferred embodiment, the inlet 136 is transverse to the riser 46. Such construction imparts increased shear to the slurry, thereby keeping the floccules evenly suspended, and preventing local sedimentation. The riser 46 is preferably constructed of 10 gauge sheet metal having a thickness of about 0.05mm. The pipe 132 is preferably constructed of carbon steel (SCH. 40) with a preferred diameter of about 10" (25.4cm).

The upper diffuser portion 130 terminates in a rim 138 defining an elongate narrow outlet slot 139 having a pair of upstanding end risers 140 contiguous with the sides 124 of the diffuser 46. The end risers 140 project upwardly above the rim 138 for about 3" (7.6cm) and are constructed of the same material as the diffuser 46. A weir plate assembly 141 includes pair of generally V-shaped weir plates 142 running parallel to and about 3" (7.6cm) below the rim 138. The weir plates 142 extend downwardly for a distance of approximately 4" (10.2cm). A generally planar spacer 144 is coupled with a respective front or back diffuser surface 120 or 122 in spaced parallel relationship to the rim 138. A generally planar wedge plate 146 is coupled with the spacer 144 in overlapping relationship. In this manner, the spacer 144 and wedge 146 cooperatively form a slot 148 for receiving and supporting one leg of the weir plate 142 in contact with a respective front or back surface 120 or 122 of the upper portion 130 of the diffuser 46. The distance of the weir plate 142 from the rim 138 may be adjusted somewhat for leveling by vertical movement of the weir plate 142 within the slot 148. The spacer 144 serves as a stop to limit the extent of downward movement of the weir plate 142.

The weir plates 142 subtend an angle of from about 30° to about 60° from the horizontal. In preferred embodiments, this angle matches that of the tracking screen assembly 44, generally about 40° to about 55°, preferably about 45° to about 50°. The weir plates 142 are preferably constructed of 10 gauge sheet metal having a thickness of about 0.05mm, and extend the entire length of the front and back walls 120 and 122 of the riser 46.

Referring now to Figure 8, a method for high speed dewatering of slurries in accordance with the invention includes the steps of continuously or continually measuring one or both of the flow rate 12 and the pulp density 14 of a stream of slurry, adding to the slurry a quantity of a flocculating agent which is determined in accordance with the flow rate and/or pulp density measurements and subjecting the slurry to a dewatering process 20. In more detail, slurry to be dewatered according to the system and method 10 of the invention can be obtained by dredging as described in U.S. Patent No. 5,656,174. Those skilled in the art will appreciate that the method of the invention may be employed in conjunction with hydraulic dredge systems which employ an auger or cutterhead hydraulic dredge to remove sludge from the bottom of a waterway. Mechanical dredge systems which employ a backhoe or so-called "clam bucket" or a drag line may also be employed. Sludge may also be obtained by gravity, for example by feedlot wash down through a drain to a well or sump. The dredged material is then diluted with water from the waterway to form a slurry 22 in order to facilitate pumping to a treatment site.

The slurry 22 may be pretreated by discharging it onto a self-cleaning coarse screen (not shown) for removal of large debris. An exemplary screen is of 10-30 mesh construction with sieve openings of about 0.59-2.0 mm for removal of large debris. The underflow slurry from the coarse screen may be pumped or gravity fed over a medium vibratory screen 24, for example, of 20-100 mesh with sieve openings of about 0.149-0.84 mm, preferably of 30-80 mesh with sieve openings of about 0.177-0.59 mm for the removal of mid-sized scalp material, such as fine gravel, shale, and coarse sand. Suitable screens may be obtained from Derrick Equipment Company or Linatex Equipment Corporation.

If the slurry contains fine material with high specific gravity which will not bind to a flocculant, such as fine sand, then it is advantageous to further pretreat the slurry using a hydrocyclone 24 to remove this material. The high specific gravity material is spun to the side of the hydrocyclone bowl, and discharged through the bottom of the cone. Alternatively, the slurry may be pumped directly to a hydrocyclone 24, without prior screening.

Following pretreatment by screening and/or by hydrocyclone 24, the residual slurry should generally comprise only fine and ultra fine materials, such as clays, silts, and organic compositions which are suitable for passage into the dewatering unit 20. In order to achieve successful flocculation, the relative pulp density of the slurry should be in the range of from about 2% to about 20% by volume, and preferably from about 5% to about 10% by volume.

The slurry flow velocity and pulp density are subject to continuous or continual measurement as the stream passes from the pretreatment screen and/or hydrocyclone 24 into a mixing unit 18. A Doppler flow meter 12 is generally employed to measure the flow rate of the slurry. Among suitable devices are the Greyline PDFM-IV, available from Greyline Instruments, Inc. and the CS ultrasonic Doppler Flow Meter available from CompuFlow. A Coriolis tube 14 is employed to determine pulp density by measurement of the density of the slurry. Alternatively, a nuclear density meter may be used.

Readings from the flow meter 12 and pulp density measurement device 14 are electronically communicated to a programmable logic controller 16 (PLC) or control logic, which can include circuitry and software. One suitable PLC 16 is the T1 PLC, available from Toshiba. The PLC 16 is programmed with a predetermined algorithm in accordance with the characteristics of the particular slurry to be processed. The PLC 16 uses the algorithm to calculate the quantity of flocculating agent necessary for optimum flocculation of the slurry according to the appropriately scaled readings from the flow meter 12 and pulp density measurement 14.

The PLC 16 transmits a signal which actuates a positive displacement pump 28 to transfer a calculated amount of polymer flocculating agent from the polymer reservoir 30 to the slurry. A metering-type pump is preferred. Among suitable devices are the Moyno (RTM) metering pumps. The PLC 16 actuates the metering pump 28 to operate at a predetermined number of revolutions per minute and thereby to add the calculated quantity of flocculating agent in accordance with the flow rate and pulp density. In preferred embodiments, a circular "halo" type multiple-port injection stage pump (not shown) is employed to provide even addition of the flocculating agent to the slurry stream. Such even addition enhances the initial contact between polymer and solids and enhances flocculation. Those skilled in the art will appreciate that the polymer may be injected in line into the slurry stream as it passes from the shaker/hydrocyclone 24 to the mixer 18, or it may be injected into the slurry when it reaches the mixer 18.

The PLC 16 is also in electronic communication with the mixer 18, for actuation of the mixer 18 to mix the slurry whenever the positive displacement pumps 28 are engaged. A dynamic mixer 18 is preferred. An exemplary simple mixer 18 includes a three-bladed paddle (not shown) and a rheostat for adjustable control of the mixing speed in accordance with the characteristics of the slurry to be dewatered. The mixing speed may be adjusted for efficient flocculation of the sludge slurry. If the mixing speed is too slow, the flocculating agent will be insufficiently dispersed. If the mixing speed is to fast, the forming floccules will be sheared.

A flocculating agent preferably comprises an anionic, cationic, or non-ionic polymer composition. Cationic polymers are not preferred where the recovered water filtrate is to be returned to the environment, because they can be toxic to fish. Particularly preferred flocculating agents comprise a polyacrylamide or a mixture of polyacrylamides. Use of a polymer composition in a dry state is preferred, although liquid emulsions may be employed. Dry polymers capable of rapid hydration are especially preferred. The polymers are prehydrated prior to addition by the pump 28 into the slurry stream. Use of recovered water from the dewatering process for prehydration of the dry polymer is especially preferred.

Flocculation commences upon addition of the flocculant, and continues as the stream of slurry moves from the mixer 18 to the dewatering unit 20. In a particularly preferred high speed dewatering method in accordance with the invention, the stream of slurry is divided following addition of the flocculating agent into a plurality of parallel processed streams, each delivered to a dewatering unit 20 having tracking screen assemblies 44. The number of parallel streams will depend on the desired throughput. Throughputs of up to 5000 US gal/min (0.30 m³s⁻¹) can be attained using four streams.

The dewatering unit 20 maybe mounted on a transportation means, such as a trailer 40 or a barge (not shown). The tracking screen assembly 44 and diffuser 46 are mounted on support frames 48, 50 and 52, which in turn are adjustably mounted on the transportation means. The actuators 86 are used to raise the unit 20 relative to the transportation means 40 from a storage position to an operating position which permits the solids to be removed from the tracking screens 106 by means of gravity. Once the unit 20 has been jacked into an operating position, the flocculated slurry stream is delivered from the mixer 18 to the diffuser 46 of the dewatering unit 20.

The previously described fan-shaped configuration of the diffuser 46 permits delivery of a stream of evenly distributed flocculated slurry onto the tracking screens 106. This results in an efficient use of the whole of the surface of each screen 106, without the clogging problems which are associated with prior art systems. Advantageously, the throughput of the system 10 is substantially enhanced. In the preferred embodiment, the inlet 136 for the stream of flocculated slurry is transverse to a delivery conduit (not shown). This imparts increased shear to the flocculated slurry, thereby keeping the floccules evenly suspended in the liquid, and preventing sedimentation within the diffuser 46. The flocculated slurry rises within the diffuser assembly from the inlet 136 and spills out through the outlet slot 139 and over the weir plates 142 onto the tracking screen assemblies 100 and 102.

The angles of the tracking screen assemblies 100 and 102 maybe adjusted to a predetermined angle using the electromechanical actuators 116. The angle at which each tracking screen 106 is set preferably matches that of the diffuser weir plates 142, namely from about 30° to about 60°, preferably from about 40° to about 55°, most preferably from about 45 to about 50° from the horizontal. The angle of the tracking screens 106 maybe determined in accordance with the composition of the suspended solids, so that the dewatered, flocculated material will slide off the tracking screens 106 without an expression of energy which would shear the formed filter cake floccules. While each of the tracking screens 106 may be independently set at a different angle, it is preferred to set the tracking screens 106 at a single angle along the length of each side of a bank of assembled units 20. Preferably, a single screen section 106 is employed along each side of an A-frame 74.

The flocculated slurry is filtered by the tracking screens 106 to afford a solid filter cake 31 and a filtrate backflow. The filtered floccules accumulate on the surface of a respective tracking screen 106, and then roll down the surface of the screen 106, in a snowball-type effect. The filtered floccules leave the screen 106 with a consistency resembling cottage cheese. In the preferred embodiment, the riser 46 is mounted on support frames 48, 50 and 52 which are adjustably mounted on the transportation means, so that the entire diffuser 46 can be raised and articulated to permit the solids to drop off into the gutter 110, 110a or 110b and over the solids ladders 112, 112a or 112b. From the gutter 110, 110a or 110b, the solids pass downwardly onto a distribution chute or conveyor belt (not shown) for removal to a belt press 32 for the step of further dewatering. Further dewatering by the belt press 32 affords a product that is sufficiently dry to permit easy disposal. It is foreseen that the filter cake may be sold as a soil product. In the event that the material in the gutter 110, 110a or 110b includes improperly flocculated material, an operator channels the flow from the gutter 110, 110a or 110b into a recycle tank.

The filtrate backflow is conveyed from the riser 46 through the drains 108 to a surge tank 34. The pulp density of the filtrate in the surge tank 34 is subject to continuous or continual measurement by the pulp density measurement device 14 and the measurements are communicated to the PLC 16. These measurements may be used alone or they may be integrated with the pulp density measurements taken from the slurry stream to calculate the quantity of flocculating agent necessary for optimum flocculation of the slurry.

The filtrate may be further clarified through any of a number of secondary treatment means 38, including settling and filtration. Settling may be achieved by means of a chevron or slant rib clarifier (not shown), or by use of a so-called frac tank (not shown). Further filtration may be accomplished using a sand filter or a carbon filter (neither shown). The clarified water can be returned to the environment, for example, to the waterway being dredged.

## Claims

1. A diffuser (46) for delivery of a stream of flocculated slurry to a tracking screen, comprising a vertically disposed conduit rising from a base (126) having an inlet (136) for the stream of flocculated slurry to an upper portion (130) where the stream of flocculated slurry is delivered to the tracking screen, said conduit having a horizontal sectional area that remains constant or increases from said base (126) to said upper portion (130), and an aspect ratio in a horizontal section that increases from said base (126) to said upper portion (130) , wherein said base (126) has a horizontal section of aspect ratio of from 1:1 to 4: 1, and said upper portion (130) has a horizontal section of aspect ratio of from 40: 1 to 100: 1, the ratio of the horizontal sectional areas at the upper portion (130) and the base (126) being from 1:1 to 3: 1.

2. A diffuser (46) according to claim 1 , which is generally fan-shaped, and which, in a front elevation, rises from a base (126), *via* a triangular middle portion (128), to an upper portion (130) which is wider than the base (126), and, in a side elevation, tapers from a base (126) to a narrower upper portion (126).

3. A diffuser (46) according to claim 2, wherein the base (126) and the upper portion (126), in both front elevation and in side elevation, are rectangular.

4. A diffuser (46) according to claim 1, wherein the inlet (136) for the stream of flocculated slurry is transverse to the conduit.

5. A diffuser (46) according to claim 1, further comprising flanges (142) disposed parallel to and below the rim (138) of the front and back of the upper portion (130) of the diffuser, extending downwardly at an angle of from 30 to 60° from the horizontal.

6. A method of dewatering a stream of slurry, comprising the steps of:
(a) continual or continuous determination of one or more parameters;
(b) addition of a flocculating agent to the stream of slurry in response to the determined parameter or parameters;
(c) mixing the flocculating agent with the slurry, to afford a stream of flocculated slurry;
(d) delivering the flocculated slurry through a diffuser (46) onto a tracking screen (44); and
(e) filtering the flocculated slurry through the tracking screen (44) to afford solids and a filtrate;
wherein the parameters are: the flow rate of the slurry ; the pulp density of the slurry; and the pulp density of the filtrate,
and wherein the diffuser (46) comprises a vertically disposed conduit rising from a base (126) having the inlet (136) for the stream of flocculated slurry to an upper portion (130) where the stream of flocculated slurry is delivered to the tracking screen (44), said conduit having a horizontal sectional area that remains constant or increases from said base (126) to said upper portion (130), and an aspect ratio in a horizontal section that increases from said base (126) to said upper portion (130), wherein said base (126) of said diffuser (46) has a horizontal section of aspect ratio of from 1: 1 to 4: 1, and said upper portion of said diffuser (46) has a horizontal section of aspect ratio of from 40:1 to 100:1, the ratio of the horizontal sectional areas at the upper portion (130) and the base (126) being from 1:1 to 3:1.

7. A method according to claim 6, wherein the diffuser (46) is generally fan-shaped, and which, in a front elevation, rises from a base (126), *via* a triangular middle portion (128), to a upper portion (130) which is wider than the base (126), and, in a side elevation, tapers from a base (126) to a narrower upper portion (130).

8. A method according to claim 7, wherein the base (1126) and the upper portion (130) of the diffuser, in both front elevation and in side elevation, are rectangular.

9. A method according to claim 6, wherein the inlet (136) for the stream of flocculated slurry is transverse to the conduit.

10. A method according to claim 6, wherein the diffuser (46) further comprises flanges (142) disposed parallel to and below the rim (138) of the front and back of the upper portion (130) of the diffuser, extending downwardly at an angle of from 30 to 60° from the horizontal.

11. A method according to claim 6, wherein the parameters determined in step (a) are the flow rate of the slurry and/or the pulp density of the slurry.

12. A method according to claim 11, wherein the parameters determined in step (a) are the flow rate of the slurry and the pulp density of the slurry.

13. A method according to claims 6, wherein the flow rate of the slurry is determined by means of a Doppler flow meter (12) or a coriolis tube (14).

14. A method according to claim 6, wherein the addition of the flocculating agent is achieved by means of a positive displacement pump (28).

15. A method according to claim 6, wherein the mixing in step (c) is controlled in response to the determined parameter or parameters.

16. A method according to claim 6, wherein the mixing in step (c) is achieved by means of a dynamic mixer (18).

17. A method according to claim 6, wherein said flocculating agent comprises an anionic, cationic, or non-ionic polymer, or a polyacrylamide or a mixture of polyacrylamides.

18. A method according to claim 6, wherein said tracking screen (44) comprises two screens mounted on an A-frame (74).

19. A method according to claim 18, wherein said tracking screen (44) is set at a single angle along the whole length of each screen.

20. A method according to claim 19, wherein said tracking screen (44) comprises a single screen section on each side of the A frame (74).

21. A method according to claim 19, wherein said angle is from 30 to 60° from the horizontal.

22. A method according to claim 6, wherein said tracking screen (44) has openings of from 0.5 to 0.9 mm.

23. A method according to claim 18, wherein the screens (44) are hingedly mounted at the apex of the A frame (74).

24. A method according to claim 23, wherein the screens (44) are provided with electromechanical actuators to adjust the screen angle.

25. A method according to claim 6, wherein the tracking screen (44) is provided with a vibrator to enhance the efficiency of the filtration.

26. A method according to claim 6, further comprising the step of :
(f) further clarification of the filtrate.

27. A method according to claim 26, further comprising the step of :
(g) further dewatering of the solids.

29. A method according to claim 6, wherein the addition of the flocculating agent is controlled by a programmable logic control (16) in communication with the means to determine the parameter or parameters, and in communication with the means for adding the flocculating agent.

30. A method according to claim 29, wherein the mixing is also controlled by the programmable logic control (16) which is also in communication with the mixer (18).

31. An apparatus for dewatering a stream of slurry, comprising:
(i) means (12, 14) to continually or continuously determine one more parameters;
(ii) means (28) for adding the flocculating agent to the slurry;
(iii) means (28) responsive to the determined parameter or parameters to control the rate of addition of the flocculating agent by the means for adding;
(iv) a mixer (18) to mix the flocculating agent with the slurry to generate a stream of flocculated slurry;
(v) a tracking screen (44) to filter the flocculated slurry to afford solids and a filtrate; and
(vi) a diffuser (46) to deliver the flocculated slurry onto the tracking screen; wherein the parameters are: the flow rate of the slurry; the pulp density of the slurry; and the pulp density of the filtrate, and wherein the diffuser is according to any one of claims 1 to 5.

32. An apparatus according to claim 31, comprising means (12, 14) to determine the flow rate of the slurry and the pulp density of the slurry.

33. An apparatus according to claim 31, wherein said means to determine the flow rate of the slurry comprises a Doppler flow meter (12) or a coriolis tube (14).

34. An apparatus according to claim 31, wherein said means for adding the flocculating agent comprises a positive displacement pump (98).

35. An apparatus according to claim 31, wherein said means to control (16) the rate of addition of the flocculating agent comprises a programmable logic control in communication with the means (12, 14) to determine the parameter or parameters, and in communication with the means for adding the flocculating agent (28).

36. An apparatus according to claim 31, wherein said mixer (18) is in communication with the means (28) to control the rate of addition of the flocculating agent.

37. An apparatus according to claim 31, wherein said mixer (28) is a dynamic mixer.

38. An apparatus according to claim 31, wherein said tracking screen (44) comprises two screens mounted on an A-frame (74).

39. An apparatus according to claim 38, wherein said tracking screen (44) is set at a single angle along the whole length of each screen.

40. An apparatus according to claim 39, wherein said tracking screen (44) comprises a single screen section on each side of the A frame (74).

41. An apparatus according to claim 40, wherein said angle is from 30 to 60° from the horizontal.

42. An apparatus according to claim 31, wherein said tracking screen (44) has openings of from 0.5 to 0.9 mm.

43. An apparatus according to claim 31, wherein the screens are hingedly mounted at the apex of the A frame (74).

44. An apparatus according to claim 43, wherein the screens (44) are provided with electromechanical actuators to adjust the screen angle.

45. An apparatus according to claim 31, wherein the tracking screen (44) is provided with a vibrator to enhance the efficiency of the filtration.

46. An apparatus according to claim 31, further comprising an elongate gutter (110, 110a, 110b) for collecting filter cake from the tracking screen (44).

47. An apparatus according to claim 31, wherein the assembly comprising the diffuser (46) and the tracking screen (44) is mounted on a support, the support being adjustably mounted on a transportation means (40), so that the assembly can be moved relative to the transportation means (40) so as to allow solids to be removed from the tracking screen by means of gravity.

48. An apparatus according to claim 47, wherein the means for movement of the assembly comprises one or more electromechanical actuators or jacks (116).

49. An apparatus according to claim 47, wherein the transportation means is a barge or a trailer (40).

50. An apparatus according to claim 46, wherein said elongate gutter (110) is pivotally coupled with said separation screen (44) for permitting adjustment of an angle of repose of said filter cake within said apparatus.

51. An apparatus according to claim 50, wherein:
said bottom wall (113) inclines downwardly to an aperture (115) for enabling said filtercake to flow out of said apparatus;
said sidewalls (111) extend downwardly toward said aperture; and
whereby said apparatus has greater depth adjacent said aperture (115) than at an opposite end from said aperture, due to the downward inclination of said bottom wall in cooperation with said sidewalls.

## Patentansprüche

1. Diffusor (46) zur Zufuhr eines Stroms von ausgeflocktem Schlamm zu einem Nachlaufsieb, der eine vertikal angeordnete Leitung umfasst, die von einer Basis (126), die einen Einlass (136) für den Strom von ausgeflocktem Schlamm hat, zu einem oberen Abschnitt (130), wo der Strom von ausgeflocktem Schlamm zu dem Nachlaufsieb zugeführt wird, aufsteigt, wobei die Leitung eine horizontale Schnittfläche, die von der Basis (126) zu dem oberen Abschnitt (130) konstant bleibt oder zunimmt, und ein Streckungsverhältnis in einem horizontalen Schnitt, das von der Basis (126) zu dem oberen Abschnitt (130) zunimmt, hat, wobei die Basis (126) einen horizontalen Schnitt mit einem Streckungsverhältnis von 1:1 bis 4:1 hat und der obere Abschnitt (130) einen horizontalen Schnitt mit einem Streckungsverhältnis von 40:1 bis 100:1 hat, wobei das Verhältnis der horizontalen Schnittflächen an dem oberen Abschnitt (130) und der Basis (126) von 1:1 bis 3:1 beträgt.

2. Diffusor (46) nach Anspruch 1, der im Allgemeinen fächerförmig ist und der, in einer Vorderansicht, von einer Basis (126), über einen dreieckigen Mittelabschnitt (128), zu einem oberen Abschnitt (130), der breiter ist als die Basis (126), ansteigt und sich, in einer Seitenansicht, von einer Basis (126) zu einem schmaleren oberen Abschnitt (130) verjüngt.

3. Diffusor (46) nach Anspruch 2, wobei die Basis (126) und der obere Abschnitt (130), sowohl in der Vorderansicht als auch in der Seitenansicht, rechteckig sind.

4. Diffusor (46) nach Anspruch 1, wobei der Einlass (136) für den Strom von ausgeflocktem Schlamm quer zu der Leitung verläuft.

5. Diffusor (46) nach Anspruch 1, der ferner Flansche (142) umfasst, die parallel zu und unter dem Rand (138) der Vorderseite und der Rückseite des oberen Abschnitts (130) des Diffusors angeordnet sind, wobei sie sich nach unten in einem Winkel von 30 bis 60° gegenüber der Horizontalen erstrecken.

6. Verfahren zum Entwässern eines Stroms von Schlamm, das die folgenden Schritte umfasst:
(a) das fortwährende oder durchgehende Bestimmen eines oder mehrerer Parameter,
(b) das Hinzufügen eines Flockungsmittels zu dem Strom von Schlamm als Reaktion auf den oder die bestimmten Parameter,
(c) das Mischen des Flockungsmittels mit dem Schlamm, um einen Strom von ausgeflocktem Schlamm zu erzeugen,
(d) das Zuführen des ausgeflockten Schlamms durch einen Diffusor (46) auf ein Nachlaufsieb (44) und
(e) das Filtern des ausgeflockten Schlamms durch das Nachlaufsieb (44), um Feststoffe und ein Filtrat zu erzeugen,
wobei die Parameter die folgenden sind: die Durchflussmenge des Schlamms, die Trübedichte des Schlamms und die Trübedichte des Filtrats,
und wobei der Diffusor (46) eine vertikal angeordnete Leitung umfasst, die von einer Basis (126), die den Einlass (136) für den Strom von ausgeflocktem Schlamm hat, zu einem oberen Abschnitt (130), wo der Strom von ausgeflocktem Schlamm zu dem Nachlaufsieb (44) zugeführt wird, aufsteigt, wobei die Leitung eine horizontale Schnittfläche, die von der Basis (126) zu dem oberen Abschnitt (130) konstant bleibt oder zunimmt, und ein Streckungsverhältnis in einem horizontalen Schnitt, das von der Basis (126) zu dem oberen Abschnitt (130) zunimmt, hat, wobei die Basis (126) des Diffusors (46) einen horizontalen Schnitt mit einem Streckungsverhältnis von 1:1 bis 4:1 hat und der obere Abschnitt des Diffusors (46) einen horizontalen Schnitt mit einem Streckungsverhältnis von 40:1 bis 100:1 hat, wobei das Verhältnis der horizontalen Schnittflächen an dem oberen Abschnitt (130) und der Basis (126) von 1:1 bis 3:1 beträgt.

7. Verfahren nach Anspruch 6, wobei der Diffusor (46) im Allgemeinen fächerförmig ist und, in einer Vorderansicht, von einer Basis (126), über einen dreieckigen Mittelabschnitt (128), zu einem oberen Abschnitt (130), der breiter ist als die Basis (126), ansteigt und sich, in einer Seitenansicht, von einer Basis (126) zu einem schmaleren oberen Abschnitt (130) verjüngt.

8. Verfahren nach Anspruch 7, wobei die Basis (126) und der obere Abschnitt (130) des Diffusors, sowohl in der Vorderansicht als auch in der Seitenansicht, rechteckig sind.

9. Verfahren nach Anspruch 6, wobei der Einlass (136) für den Strom von ausgeflocktem Schlamm quer zu der Leitung verläuft.

10. Verfahren nach Anspruch 6, wobei der Diffusor (46) ferner Flansche (142) umfasst, die parallel zu und unter dem Rand (138) der Vorderseite und der Rückseite des oberen Abschnitts (130) des Diffusors angeordnet sind, wobei sie sich nach unten in einem Winkel von 30 bis 60° gegenüber der Horizontalen erstrecken.

11. Verfahren nach Anspruch 6, wobei die in Schritt (a) bestimmten Parameter die Durchflussmenge des Schlamms und/oder die Trübedichte des Schlamms sind.

12. Verfahren nach Anspruch 11, wobei die in Schritt (a) bestimmten Parameter die Durchflussmenge des Schlamms und die Trübedichte des Schlamms sind.

13. Verfahren nach Anspruch 6, wobei die Durchflussmenge des Schlamms mit Hilfe eines Doppler-Durchflussmessers (12) oder eines Coriolis-Rohrs (14) bestimmt wird.

14. Verfahren nach Anspruch 6, wobei das Hinzufügen des Flockungsmittels mit Hilfe einer Verdrängerpumpe (28) erreicht wird.

15. Verfahren nach Anspruch 6, wobei das Mischen in Schritt (c) als Reaktion auf den oder die bestimmten Parameter gesteuert wird.

16. Verfahren nach Anspruch 6, wobei das Mischen in Schritt (c) mit Hilfe eines dynamischen Mischers (18) erreicht wird.

17. Verfahren nach Anspruch 6, wobei das Flockungsmittel ein anionisches, kationisches oder nichtionisches Polymer oder ein Polyacrylamid oder ein Gemisch von Polyacrylamiden umfasst.

18. Verfahren nach Anspruch 6, wobei das Nachlaufsieb (44) zwei Siebe umfasst, die an einem Dreiecksrahmen (74) angebracht sind.

19. Verfahren nach Anspruch 18, wobei das Nachlaufsieb (44) entlang der gesamten Länge jedes Siebes in einem einzigen Winkel eingestellt ist.

20. Verfahren nach Anspruch 19, wobei das Nachlaufsieb (44) auf jeder Seite des Dreiecksrahmens (74) eine einzige Siebsektion umfasst.

21. Verfahren nach Anspruch 19, wobei der Winkel von 30 bis 60° gegenüber der Horizontalen beträgt.

22. Verfahren nach Anspruch 6, wobei das Nachlaufsieb (44) Öffnungen von 0,5 bis 0,9 mm hat.

23. Verfahren nach Anspruch 18, wobei die Siebe (44) schwenkbar am Scheitel des Dreiecksrahmens (74) angebracht sind.

24. Verfahren nach Anspruch 23, wobei die Siebe (44) mit elektromechanischen Stellantrieben versehen sind, um den Siebwinkel einzustellen.

25. Verfahren nach Anspruch 6, wobei das Nachlaufsieb (44) mit einem Rüttler versehen ist, um den Wirkungsgrad der Filterung zu verbessern.

26. Verfahren nach Anspruch 6, das ferner den folgenden Schritt umfasst:
(f) das weitere Klären des Filtrats.

27. Verfahren nach Anspruch 26, das ferner den folgenden Schritt umfasst:
(g) das weitere Entwässern der Feststoffe.

29. Verfahren nach Anspruch 6, wobei das Hinzufügen des Flockungsmittels durch eine programmierbare Logiksteuerung (16) in Kommunikation mit dem Mittel für das Bestimmen des Parameters oder der Parameter und in Kommunikation mit dem Mittel für das Hinzufügen des Flockungsmittels gesteuert wird.

30. Verfahren nach Anspruch 29, wobei das Mischen ebenfalls durch die programmierbare Logiksteuerung (16) gesteuert wird, die ebenfalls in Kommunikation mit dem Mixer (18) steht.

31. Vorrichtung zum Entwässern eines Stroms von Schlamm, die Folgendes umfasst:
(i) ein Mittel (12, 14) für das fortwährende oder durchgehende Bestimmen eines oder mehrerer Parameter,
(ii) ein Mittel (28) für das Hinzufügen des Flockungsmittels zu dem Schlamm,
(iii) ein Mittel (28), das auf den oder die bestimmten Parameter reagiert, um die Geschwindigkeit des Hinzufügens des Flockungsmittel durch das Mittel für das Hinzufügen zu steuern,
(iv) einen Mischer (18) für das Mischen des Flockungsmittels mit dem Schlamm, um einen Strom von ausgeflocktem Schlamm zu erzeugen,
(v) ein Nachlaufsieb (44) für das Filtern des ausgeflockten Schlamms, um Feststoffe und ein Filtrat zu erzeugen, und
(vi) einen Diffusor (46) für das Zuführen des ausgeflockten Schlamms auf das Nachlaufsieb (44), wobei die Parameter die folgenden sind: die Durchflussmenge des Schlamms, die Trübedichte des Schlamms und die Trübedichte des Filtrats, und wobei der Diffusor nach einem der Ansprüche 1 bis 5 ist.

32. Vorrichtung nach Anspruch 31, die ein Mittel (12, 14) für das Bestimmen der Durchflussmenge des Schlamms und der Trübedichte des Schlamms umfasst.

33. Vorrichtung nach Anspruch 31, wobei das Mittel für das Bestimmen der Durchflussmenge des Schlamms einen Doppler-Durchflussmesser (12) oder ein Coriolis-Rohr (14) umfasst.

34. Vorrichtung nach Anspruch 31, wobei das Mittel für das Hinzufügen des Flockungsmittels eine Verdrängerpumpe (28) umfasst.

35. Vorrichtung nach Anspruch 31, wobei das Mittel (16) für das Steuern der Geschwindigkeit des Hinzufügens des Flockungsmittels eine programmierbare Logiksteuerung in Kommunikation mit dem Mittel (12, 14) für das Bestimmen des Parameters oder der Parameter und in Kommunikation mit dem Mittel (28) für das Hinzufügen des Flockungsmittels umfasst.

36. Vorrichtung nach Anspruch 31, wobei der Mischer (18) in Kommunikation mit dem Mittel (28) für das Steuern der Geschwindigkeit des Hinzufügens des Flockungsmittels steht.

37. Vorrichtung nach Anspruch 31, wobei der Mischer (18) ein dynamischer Mischer ist.

38. Vorrichtung nach Anspruch 31, wobei das Nachlaufsieb (44) zwei Siebe umfasst, die an einem Dreiecksrahmen (74) angebracht sind.

39. Vorrichtung nach Anspruch 38, wobei das Nachlaufsieb (44) entlang der gesamten Länge jedes Siebes in einem einzigen Winkel eingestellt ist.

40. Vorrichtung nach Anspruch 39, wobei das Nachlaufsieb (44) auf jeder Seite des Dreiecksrahmens (74) eine einzige Siebsektion umfasst.

41. Vorrichtung nach Anspruch 40, wobei der Winkel von 30 bis 60° gegenüber der Horizontalen beträgt.

42. Vorrichtung nach Anspruch 31, wobei das Nachlaufsieb (44) Öffnungen von 0,5 bis 0,9 mm hat.

43. Vorrichtung nach Anspruch 31, wobei die Siebe schwenkbar am Scheitel des Dreiecksrahmens (74) angebracht sind.

44. Vorrichtung nach Anspruch 43, wobei die Siebe (44) mit elektromechanischen Stellantrieben versehen sind, um den Siebwinkel einzustellen.

45. Vorrichtung nach Anspruch 31, wobei das Nachlaufsieb (44) mit einem Rüttler versehen ist, um den Wirkungsgrad der Filterung zu verbessern.

46. Vorrichtung nach Anspruch 31, die ferner eine längliche Rinne (110, 110a, 110b) umfasst, um Filterkuchen aus dem Nachlaufsieb (44) zu sammeln.

47. Vorrichtung nach Anspruch 31, wobei die Baugruppe, die den Diffusor (46) und das Nachlaufsieb (44) umfasst, auf einem Träger angebracht ist, wobei der Träger einstellbar auf einem Beförderungsmittel (40) angebracht ist, so dass die Baugruppe im Verhältnis zu dem Beförderungsmittel (40) bewegt werden kann, um so zu ermöglichen, dass Feststoffe mit Hilfe der Schwerkraft von dem Nachlaufsieb entfernt werden.

48. Vorrichtung nach Anspruch 47, wobei die Mittel für das Bewegen der Baugruppe einen oder mehrere elektromechanische Stellantriebe oder Heber (116) umfassen.

49. Vorrichtung nach Anspruch 47, wobei das Beförderungsmittel ein Lastkahn oder ein Anhänger (40) ist.

50. Vorrichtung nach Anspruch 46, wobei die längliche Rinne (110) schwenkbar mit dem Abscheidungssieb (44) gekoppelt ist, um eine Einstellung eines Schüttwinkels des Filterkuchens innerhalb der Vorrichtung zu ermöglichen.

51. Vorrichtung nach Anspruch 50, wobei:
sich die untere Wand (113) nach unten zu einer Öffnung (115) neigt, um zu ermöglichen, dass der Filterkuchen aus der Vorrichtung strömt,
sich die Seitenwände (111) nach unten zu der Öffnung erstrecken und
wobei die Vorrichtung angrenzend an die Öffnung (115), auf Grund der Abwärtsneigung der unteren Wand im Zusammenwirken mit den Seitenwänden, eine größere Tiefe hat als an einem zu der Öffnung entgegengesetzten Ende.

## Revendications

1. Diffuseur (46) permettant de fournir un flux de boue floculée à un crible mobile, comprenant un conduit disposé de manière verticale et s'élevant à partir d'une base (126) présentant une admission (136) pour le flux de boue floculée vers une partie supérieure (130) où le flux de boue floculée est fourni au crible mobile, ledit conduit présentant une surface de section horizontale qui reste constante ou augmente à partir de ladite base (126) vers ladite partie supérieure (130), et un rapport d'aspect en section horizontale qui augmente à partir de ladite base (126) vers ladite partie supérieure (130), ladite base (126) présentant une section horizontale ayant un rapport d'aspect compris entre 1:1 et 4:1, et ladite partie supérieure (130) présentant une section horizontale ayant un rapport d'aspect compris entre 40:1 et 100:1, le rapport des surfaces de section horizontale au niveau de la partie supérieure (130) et de la base (126) étant compris entre 1:1 et 3:1.

2. Diffuseur (46) selon la revendication 1, qui est généralement en forme d'éventail, et qui, en élévation avant, s'élève à partir d'une base (126), en passant par une partie médiane triangulaire (128), vers une partie supérieure (130) qui est plus large que la base (126), et, en élévation latérale, se rétrécit à partir d'une base (126) vers une partie supérieure (130) plus étroite.

3. Diffuseur (46) selon la revendication 2, dans lequel la base (126) et la partie supérieure (130), à la fois en élévation avant et en élévation latérale, sont rectangulaires.

4. Diffuseur (46) selon la revendication 1, dans lequel l'admission (136) pour le flux de boue floculée est perpendiculaire au conduit.

5. Diffuseur (46) selon la revendication 1, comprenant en outre des brides (142) disposées parallèlement au et en dessous du rebord (138) de l'avant et de l'arrière de la partie supérieure (130) du diffuseur, et s'étendant vers l'aval selon un angle compris entre 30 et 60° par rapport à l'horizontale.

6. Procédé d'assèchement d'un flux de boue, comprenant les étapes consistant à :
(a) déterminer de manière continuelle ou en continu un ou plusieurs paramètres ;
(b) ajouter un agent floculant au flux de boue en réaction au paramètre ou aux paramètres déterminé(s) ;
(c) mélanger l'agent floculant avec la boue, pour offrir un flux de boue floculée ;
(d) fournir la boue floculée à un crible mobile (44) par l'intermédiaire d'un diffuseur (46) ; et
(e) filtrer la boue floculée à travers le crible mobile (44) pour offrir des matières solides et un filtrat ;
dans lequel les paramètres sont : le débit d'écoulement de la boue, la densité de pulpe de la boue ; et la densité de pulpe du filtrat,
et dans lequel le diffuseur (46) comprend un conduit disposé verticalement s'élevant à partir d'une base (126) présentant l'admission (136) pour le flux de boue floculée vers une partie supérieure (130) où le flux de boue floculée est fourni au crible mobile (44), ledit conduit présentant une surface de section horizontale qui reste constante ou augmente à partir de ladite base (126) vers ladite partie supérieure (130), et un rapport d'aspect en section horizontale qui augmente à partir de ladite base (126) vers ladite partie supérieure (130), ladite base (126) dudit diffuseur (46) présentant une section horizontale ayant un rapport d'aspect compris entre 1 :1 et 4 :1, et ladite partie supérieure dudit diffuseur (46) présentant une section horizontale ayant un rapport d'aspect compris entre 40:1 et 100:1, le rapport des surfaces de section horizontale au niveau de la partie supérieure (130) et de la base (126) étant compris entre 1:1 et 3:1.

7. Procédé selon la revendication 6, dans lequel le diffuseur (46) est généralement en forme d'éventail, et qui, en élévation avant, s'élève à partir d'une base (126), en passant par une partie médiane triangulaire (128), vers une partie supérieure (130) qui est plus large que la base (126), et, en élévation latérale, se rétrécit à partir d'une base (126) vers une partie supérieure (130) plus étroite.

8. Procédé selon la revendication 7, dans lequel la base (126) et la partie supérieure (130) du diffuseur, à la fois en élévation avant et en élévation latérale, sont rectangulaires.

9. Procédé selon la revendication 6, dans lequel l'admission (136) pour le flux de boue floculée est perpendiculaire au conduit.

10. Procédé selon la revendication 6, dans lequel le diffuseur (46) comprend en outre des brides (142) disposées parallèlement au et en dessous du rebord (138) de l'avant et de l'arrière de la partie supérieure (130) du diffuseur, et s'étendant vers l'aval selon un angle compris entre 30 et 60° par rapport à l'horizontale.

11. Procédé selon la revendication 6, dans lequel les paramètres déterminés à l'étape (a) sont le débit d'écoulement de la boue et/ou la densité de pulpe de la boue.

12. Procédé selon la revendication 11, dans lequel les paramètres déterminés à l'étape (a) sont le débit d'écoulement de la boue et la densité de pulpe de la boue.

13. Procédé selon la revendication 6, dans lequel le débit d'écoulement de la boue est déterminé au moyen d'un débitmètre Doppler (12) ou d'un tube de Coriolis (14).

14. Procédé selon la revendication 6, dans lequel l'ajout d'agent floculant est obtenu au moyen d'une pompe volumétrique (28).

15. Procédé selon la revendication 6, dans lequel le mélange de l'étape (c) est commandé en réaction au paramètre ou aux paramètres déterminé(s).

16. Procédé selon la revendication 6, dans lequel le mélange de l'étape (c) est obtenu au moyen d'un mélangeur dynamique (18).

17. Procédé selon la revendication 6, dans lequel ledit agent floculant comprend un polymère anionique, cationique, ou non ionique, ou un polyacrylamide ou un mélange de polyacrylamides.

18. Procédé selon la revendication 6, dans lequel ledit crible mobile (44) comprend deux cribles montés sur un cadre en forme de A (74).

19. Procédé selon la revendication 18, dans lequel ledit crible mobile (44) est réglé selon un angle unique le long de la totalité de la longueur de chaque crible.

20. Procédé selon la revendication 19, dans lequel ledit crible mobile (44) comprend une section de crible unique sur chaque côté du cadre en forme de A (74).

21. Procédé selon la revendication 19, dans lequel ledit angle est compris entre 30 et 60° par rapport à l'horizontale.

22. Procédé selon la revendication 6, dans lequel ledit crible mobile (44) présente des ouvertures comprises entre 0, 5 et 0,9 mm.

23. Procédé selon la revendication 18, dans lequel les cribles (44) sont montés sur charnières au niveau du sommet du cadre en forme de A (74).

24. Procédé selon la revendication 23, dans lequel les cribles (44) sont munis d'actionneurs électromécaniques afin d'ajuster l'angle de crible.

25. Procédé selon la revendication 6, dans lequel le crible mobile (44) est muni d'un vibreur pour améliorer l'efficacité de la filtration.

26. Procédé selon la revendication 6, comprenant en outre l'étape consistant à :
(f) clarifier davantage le filtrat.

27. Procédé selon la revendication 26, comprenant en outre l'étape consistant à :
(g) assécher davantage les matières solides.

29. Procédé selon la revendication 6, dans lequel l'ajout de l'agent floculant est commandé par une commande logique programmable (16) en communication avec le moyen permettant de déterminer le paramètre ou les paramètres, et en communication avec le moyen permettant d'ajouter l'agent floculant.

30. Procédé selon la revendication 29, dans lequel le mélange est également commandé par la commande de logique programmable (16) qui est également en communication avec le mélangeur (18).

31. Appareil permettant d'assécher un flux de boue, comprenant :
(i) un moyen (12, 14) pour déterminer de manière continuelle ou en continu un ou plusieurs paramètre(s) ;
(ii) un moyen (28) permettant d'ajouter l'agent floculant à la boue ;
(iii) un moyen (28) réagissant au paramètre ou aux paramètres déterminé(s) afin de commander la vitesse d'ajout de l'agent floculant grâce au moyen permettant l'ajout ;
(iv) un mélangeur (18) pour mélanger l'agent floculant à la boue afin de générer un flux de boue floculée ;
(v) un crible mobile (44) pour filtrer la boue floculée afin d'offrir des matières solides et un filtrat ; et
(vi) un diffuseur (46) pour fournir la boue floculée sur le crible mobile ; dans lequel les paramètres sont : le débit d'écoulement de la boue ; la densité de pulpe de la boue ; et la densité de pulpe du filtrat, et dans lequel le diffuseur est selon l'une quelconque des revendications 1 à 5.

32. Appareil selon la revendication 31, comprenant un moyen (12, 14) permettant de déterminer le débit d'écoulement de la boue et la densité de pulpe de la boue

33. Procédé selon la revendication 31, dans lequel ledit moyen permettant de déterminer le débit d'écoulement de la boue comprend un débitmètre Doppler (12) ou un tube de Coriolis (14).

34. Appareil selon la revendication 31, dans lequel ledit moyen permettant d'ajouter l'agent floculant comprend une pompe volumétrique (28).

35. Appareil selon la revendication 31, dans lequel ledit moyen permettant de commander (16) la vitesse d'ajout de l'agent floculant comprend une commande logique programmable en communication avec le moyen (12, 14) permettant de déterminer le paramètre ou les paramètres, et en communication avec le moyen permettant d'ajouter l'agent floculant (28).

36. Appareil selon la revendication 31, dans lequel ledit mélangeur (18) est en communication avec le moyen (28) permettant de commander la vitesse d'ajout de l'agent floculant.

37. Appareil selon la revendication 31, dans lequel ledit mélangeur (18) est un mélangeur dynamique.

38. Appareil selon la revendication 31, dans lequel ledit crible mobile (44) comprend deux cribles montés sur un cadre en forme de A (74).

39. Appareil selon la revendication 38, dans lequel ledit crible mobile (44) est réglé selon un angle unique le long de la totalité de la longueur de chaque crible.

40. Appareil selon la revendication 39, dans lequel ledit crible mobile (44) comprend une section de crible unique sur chaque côté du cadre en forme de A (74).

41. Appareil selon la revendication 40, dans lequel ledit angle est compris entre 30 et 60° par rapport à l'horizontale.

42. Appareil selon la revendication 31, dans lequel ledit crible mobile (44) présente des ouvertures comprises entre 0,5 et 0,9 mm.

43. Appareil selon la revendication 31, dans lequel les cribles sont montés sur charnières au niveau du sommet du cadre en forme de A (74).

44. Appareil selon la revendication 43, dans lequel les cribles (44) sont munis d'actionneurs électromécaniques pour ajuster l'angle de crible.

45. Appareil selon la revendication 31, dans lequel le crible mobile (44) est muni d'un vibreur pour améliorer l'efficacité de la filtration.

46. Appareil selon la revendication 31, comprenant en outre une gouttière allongé (110, 110a, 110b) permettant de collecter un tourteau de filtration en provenance du crible mobile (44).

47. Appareil selon la revendication 31, dans lequel l'ensemble comprenant le diffuseur (46) et le crible mobile (44) est monté sur un support, le support étant monté de manière ajustable sur un moyen de transport (40), de sorte que l'ensemble peut être déplacé par rapport au moyen de transport (40) de manière à permettre à des matières solides d'être retirés du crible mobile au moyen de la gravité.

48. Appareil selon la revendication 47, dans lequel le moyen permettant un déplacement de l'ensemble comprend un ou plusieurs vérins ou actionneurs électromécaniques (116).

49. Appareil selon la revendication 47, dans lequel le moyen de transport est une barge ou une remorque (40).

50. Appareil selon la revendication 46, dans lequel ladite gouttière allongée (110) est couplée pivotante avec ledit crible de séparation (44) pour permettre un ajustement d'un angle d'éboulement dudit tourteau de filtration au sein dudit appareil.

51. Appareil selon la revendication 50, dans lequel :
ladite paroi de fond (113) s'incline vers l'aval par rapport à une ouverture (115) pour permettre audit tourteau de filtration de s'écouler hors dudit appareil ;
lesdites parois latérales (111) s'étendent vers l'aval en direction de ladite ouverture ; et
ledit appareil présentant une profondeur à proximité de ladite ouverture (115) supérieure à celle présentée au niveau d'une extrémité opposée de ladite ouverture, en raison de l'inclinaison vers l'aval de ladite paroi de fond en collaboration avec lesdites parois latérales.
